# EUROPÄISCHE PATENTSCHRIFT

(11) **EP 4 473 343 B1**
(45) Veröffentlichungstag und Bekanntmachung des Hinweises auf die Patenterteilung: **14.01.2026**
(21) Anmeldenummer: 23703687.6
(22) Anmeldetag: 18.01.2023
(51) Int. Cl.: G01S 15/87, G01S 13/87, G01S 15/46, G01S 13/46, G01S 15/931, G01S 13/931

(54) **VERFAHREN ZUR BESTIMMUNG DER LAGE EINES OBJEKTS**
METHOD FOR DETERMINING THE POSITION OF AN OBJECT
PROCÉDÉ POUR DÉTERMINER LA POSITION D'UN OBJET

(30) Priorität: 04.02.2022 DE 102022201189
(43) Veröffentlichungstag der Anmeldung: 11.12.2024
(73) Patentinhaber: AUMOVIO Autonomous Mobility Germany GmbH, 85057 Ingolstadt (DE)
(72) Erfinder: REICHARDT, Benjamin, 85057 Ingolstadt (DE)
(74) Vertreter: Aumovio Corporation
(86) Internationale Anmeldenummer: PCT/DE2023/200016
(87) Internationale Veröffentlichungsnummer: WO 2023/147826

(56) Entgegenhaltungen:
- EP-A1- 2 887 093
- DE-A1- 19 711 467
- US-A1- 2003 128 153

## Beschreibung

Die Erfindung betrifft ein Verfahren und ein System zur Bestimmung der Position und der zumindest abschnittsweisen Form eines Objekts durch eine entfernungsmessende Sensorik eines Fahrzeugs.

Es ist grundsätzlich bekannt, die Lage von Objekten im Umgebungsbereich eines Fahrzeugs mittels mehrerer Sensoren, die lediglich eine Entfernungsmessung, nicht aber eine Richtungsbestimmung ermöglichen, und einem Tracking-Verfahren, bei dem Reflexionen in mehreren aufeinanderfolgenden Sende-Empfangszyklen ermittelt werden, zu bestimmen.

Aus US 2003/0128153 A1 ist ein Verfahren zum Identifizieren von komplexen Objekten aus Messdaten von mehreren Sensoren bekannt. Dabei werden die Form und der Ort von Objekten durch Trilateration auf Grundlage von Messdaten von Entfernungssensoren ermittelt. Für eine Mehrzahl von vordefinierten Objekten wird dabei aus den Messdaten jeweils ein Maß für eine Wahrscheinlichkeit, dass die Form eines tatsächlichen Objekts der Form des vordefinierten Objekts entspricht, ermittelt.

In EP 2 887 093 A1 wird ein Verfahren zum Klassifizieren eines in einem Umgebungsbereich eines Kraftfahrzeugs befindlichen Objekts mittels einer Sensoreinrichtung des Kraftfahrzeugs beschrieben. Dabei werden von zumindest zwei voneinander unterschiedlichen Sensorpositionen aus Entfernungswerte zu dem zu klassifizierenden Objekt durch die Sensoreinrichtung erfasst. Das Klassifizieren erfolgt anschließend in Abhängigkeit von den zumindest zwei Entfernungswerten, wobei zwischen einem punktförmigen und einem linienförmigen Objekt unterschieden wird.

DE 197 11 467 A1 beschreibt ein Verfahren zum Bestimmen des senkrechten Abstands zwischen einem Objekt und einer sich örtlich verändernden Einrichtung wie einem Kraftfahrzeug. Durch einen an der Einrichtung angeordneten Sensor wird für eine Laufzeitmessung zur Bestimmung des Abstands zu dem Objekt ein Signal ausgesendet, welches von dem Objekt reflektiert und durch den Sensor wieder empfangen wird. Mithilfe dieses Abstandes werden anschließend alle möglichen Positionen des Objektes zu dem ersten Sensor ermittelt. Weiterhin wird das vom Objekt reflektierte Signal von einem zweiten, ebenfalls an der sich örtlich verändernden Einrichtung angeordneten Sensor empfangen. Dabei wird aus der Laufzeit des Signals vom ersten zum zweiten Sensor eine Strecke vom ersten Sensor zum Objekt und von diesem zum zweiten Sensor ermittelt, wobei aus der Strecke alle möglichen Positionen des Objekts zum zweiten Sensor bestimmt werden. Anschließend werden die möglichen Positionen des ersten und des zweiten Sensors miteinander verglichen und für die Position des Objekts, die sowohl vom ersten als auch vom zweiten Sensor bestimmt wurde, wird der senkrechte Abstand des Objekts zur sich örtlich verändernden Einrichtung berechnet.

Bekannte Verfahren bestimmen zu den einzelnen Messungen, d.h. den jeweiligen Sende-Empfangszyklen, einen Kreisbogen, wobei der Radius des Kreisbogens von der Laufzeit des Signals zwischen dem Sende- und dem Empfangszeitpunkt abhängt. Anschließend werden die aus einer Vielzahl von unterschiedlichen Messungen erhaltenen Kreisbögen miteinander korreliert, um die Position und die zumindest abschnittsweise Form eines Objekts, beispielsweise die Seitenkontur eines parkenden Fahrzeugs, zu bestimmen.

Problematisch bei bekannten Verfahren ist, dass diese eine relativ geringe Genauigkeit bei der Bestimmung der Position bzw. Form des Objekts aufweisen, was beispielsweise zu Abbrüchen bei einem durch ein Parkassistenzsystem durchgeführten Parkvorgang führen kann, da die Parklücke als zu klein angenommen wird, obwohl diese tatsächlich ausreichend groß ist.

Ausgehend hiervon ist es Aufgabe der Erfindung, ein Verfahren zur Bestimmung der Position und der zumindest abschnittsweisen Form eines Objekts anzugeben, das eine verbesserte Genauigkeit aufweist.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Bestimmung der Position und der zumindest abschnittsweisen Form eines Objekts ist Gegenstand des nebengeordneten Patentanspruchs 9.

Gemäß einem ersten Aspekt bezieht sich die Erfindung auf ein Verfahren zur Bestimmung der Position und der zumindest abschnittsweisen Form eines Objekts. Das Fahrzeug weist eine Sensorik mit zumindest einem entfernungsmessenden Sensor auf. Das Verfahren umfasst die folgenden Schritte:
Zunächst werden mehrere zeitlich aufeinanderfolgende Sende-Empfangszyklen durch die Sensorik durchgeführt. Jeder Sende-Empfangszyklus umfasst das Aussenden eines Messsignals durch zumindest einen Sensor und das Empfangen eines reflektierten Anteils dieses Messsignals durch den Sensor.

Anschließend wird pro Sende-Empfangszyklus ein Kreisringabschnitt bestimmt, in dem ein Objektabschnitt des Objekts liegt, an dem eine Reflexion des Messsignals erfolgt, und zwar basierend auf der Laufzeit zwischen dem Aussenden des Messignals und dem Empfangen eines reflektierten Anteils dieses Messsignals und einer Messunsicherheitsinformation. Die Messunsicherheitsinformation ist ein Maß für die Streuung bzw. Abweichung der gemessenen Laufzeit von der tatsächlichen Laufzeit des Messsignals zwischen dem Aussenden und dem Empfang. Die Messunsicherheitsinformation ist vorzugsweise fest vorgegeben oder wird abhängig von der jeweiligen Erfassungssituation festgelegt. Der Kreisringabschnitt weist einen inneren Kreisabschnitt und einen äußeren Kreisabschnitt auf. Der Abstand des inneren Kreisabschnitts und des äußeren Kreisabschnitts wird durch die Messunsicherheitsinformation festgelegt. Der Kreisringabschnitt gibt die Lösungsmenge von Positionen an, an denen die Reflexion entstanden sein kann. Der Kreisringabschnitt kann zu Beginn des Verfahrens ein vollständiger Kreisring sein oder aber lediglich ein Teilbereich eines Kreisrings, der sich aufgrund des Sende- bzw. Empfangswinkels jeweiligen Sensors ergibt.

Anschließend wird zumindest ein erster und ein zweiter Kreisringabschnitt ausgewählt, wobei der erste und der zweite Kreisringabschnitt auf Reflektionen an einem gemeinsamen Objekt basieren. In anderen Worten werden zumindest zwei Kreisringabschnitte ausgewählt, die aus Reflexionen an einem einzigen Objekt resultieren.

Daraufhin werden eine erste Tangente an die äußeren Kreisabschnitte des ersten und zweiten Kreisringabschnitts, eine zweite Tangente an den äußeren Kreisabschnitt des ersten Kreisringabschnitts und an den inneren Kreisabschnitt des zweiten Kreisringabschnitts und eine dritte Tangente an den inneren Kreisabschnitt des ersten Kreisringabschnitts und an den äußeren Kreisabschnitt des zweiten Kreisringabschnitts gebildet. Die erste Tangente berührt damit die äußeren Kreisabschnitte des ersten und zweiten Kreisringabschnitts. Die zweite Tangente berührt den äußeren Kreisabschnitt des ersten Kreisringabschnitts und den inneren Kreisabschnitt des zweiten Kreisringabschnitts. Die dritte Tangente berührt den inneren Kreisabschnitt des ersten Kreisringabschnitts und den äußeren Kreisabschnitt des zweiten Kreisringabschnitts.

Anschließend wird der erste Kreisringabschnitt auf einen reduzierten ersten Kreisringabschnittbereich basierend auf dem Berührpunkt der ersten Tangente mit dem äußeren Kreisabschnitt des ersten Kreisringabschnitts und dem Berührpunkt der dritten Tangente mit dem inneren Kreisabschnitt des ersten Kreisringabschnitts beschränkt. Alternativ oder zusätzlich wird der zweite Kreisringabschnitt auf einen reduzierten zweiten Kreisringabschnittbereich basierend auf dem Berührpunkt der ersten Tangente mit dem äußeren Kreisabschnitt des zweiten Kreisringabschnitts und dem Berührpunkt der zweiten Tangente mit dem inneren Kreisabschnitt des zweiten Kreisringabschnitts beschränkt.

Zuletzt werden die Position und die zumindest abschnittsweise Form des Objekts basierend auf dem reduzierten ersten Kreisringabschnittbereich und/oder dem reduzierten zweiten Kreisringabschnittbereich beschränkt.

Der technische Vorteil des erfindungsgemäßen Verfahrens besteht darin, dass durch die umfangsseitige Beschränkung des Kreisringabschnitts auf einen Teilbereich desselben die Genauigkeit der Lagebestimmung eines Objekts erheblich gesteigert werden kann. Der Erfindung liegt die Erkenntnis zu Grunde, dass Umgebungsobjekte in den allermeisten Fällen entweder eine gerade oder konvex gewölbte Außenkontur aufweisen, wobei "konvex gewölbt" auch nach außen gerichtete Ecken bzw. Kanten miteinschließt. Auf Basis dieser Erkenntnis kann der Erfassungsbereich vorteilhafterweise eingeschränkt werden, ohne dabei die Detektion von Objekten über Gebühr einzuschränken.

Gemäß einem Ausführungsbeispiel erfolgt das Beschränken des ersten Kreisringabschnitts auf den reduzierten ersten Kreisringabschnittbereich durch Verbinden des Berührpunkts, an dem die erste Tangente den äußeren Kreisabschnitt des ersten Kreisringabschnitts berührt, mit dem Berührpunkt, an dem die dritte Tangente den inneren Kreisabschnitt des ersten Kreisringabschnitts berührt. Alternativ oder zusätzlich erfolgt das Beschränken des zweiten Kreisringabschnitts auf den reduzierten zweiten Kreisringabschnittbereich durch Verbinden des Berührpunkts, an dem die erste Tangente den äußeren Kreisabschnitt des zweiten Kreisringabschnitts berührt, mit dem Berührpunkt, an dem die zweite Tangente den inneren Kreisabschnitt des zweiten Kreisringabschnitts berührt. Das Verbinden kann durch eine Gerade oder eine gekrümmte Verbindungslinie erfolgen. Dadurch werden die Kreisringabschnitte in Umfangsrichtung begrenzt und damit die Lösungsmenge von Positionen, an denen die Reflexion entstanden sein kann, eingegrenzt.

Gemäß einem Ausführungsbeispiel erfolgt das Beschränken des ersten Kreisringabschnitts auf einen reduzierten ersten Kreisringabschnittbereich zudem auf Basis eines Schnittpunkts des inneren Kreisabschnitts des ersten Kreisringabschnitts mit dem inneren Kreisabschnitt des zweiten Kreisringabschnitts und/oder auf Basis eines Schnittpunkts des äußeren Kreisabschnitts des ersten Kreisringabschnitts mit dem inneren Kreisabschnitt des zweiten Kreisringabschnitts. Diese Schnittpunkte eignen sich dazu, den ersten Kreisringabschnitt nach innen hin umfangsseitig zu begrenzen, so dass der Lösungsraum weiter eingegrenzt wird.

Gemäß einem Ausführungsbeispiel erfolgt das Beschränken des zweiten Kreisringabschnitts auf einen reduzierten zweiten Kreisringabschnittbereich zudem auf Basis eines Schnittpunkts des inneren Kreisabschnitts des ersten Kreisringabschnitts mit dem inneren Kreisabschnitt des zweiten Kreisringabschnitts und/oder auf Basis eines Schnittpunkts des äußeren Kreisabschnitts des zweiten Kreisringabschnitts mit dem inneren Kreisabschnitt des ersten Kreisringabschnitts. Diese Schnittpunkte eignen sich dazu, den zweiten Kreisringabschnitt nach innen hin umfangsseitig zu begrenzen, so dass der Lösungsraum weiter eingegrenzt wird.

Gemäß einem Ausführungsbeispiel werden zumindest drei Messungen an unterschiedlichen Orten durchgeführt, so dass ein erster, ein zweiter und ein dritter Kreisringabschnitt entsteht, wobei der Ort, von dem aus die zweite Messung durchgeführt wird, zwischen dem ersten und dritten Ort liegt. Dabei werden folgende Schritte vollzogen:
- Einschränken des zweiten Kreisringabschnitts, der auf der zweiten Messung beruht, auf einen reduzierten zweiten Kreisringabschnittbereich unter Berücksichtigung des ersten Kreisringabschnitts;
- Einschränken des zweiten Kreisringabschnitts, der auf der zweiten Messung beruht, auf einen weiteren reduzierten zweiten Kreisringabschnittbereich unter Berücksichtigung des dritten Kreisringabschnitts; und
- Bilden einer Schnittmenge aus reduziertem zweiten Kreisringabschnittbereich und weiterem reduzierten zweiten Kreisringabschnittbereich;
- Bestimmen der Position und abschnittsweisen Form des Objekts basierend auf der Schnittmenge aus reduziertem zweiten Kreisringabschnittbereich und weiterem reduziertem zweiten Kreisringabschnittbereich.

Durch die iterative Anwendung des Verfahrens, wobei diese iterative Anwendung auch mehr als drei Messungen umfassen kann, kann der Lösungsraum von Messungen, die zwischen zwei oder mehr Messungen liegen, weiter eingeschränkt werden, was zu einer weiter verbesserten Lokalisierungsgenauigkeit führt.

Gemäß einem Ausführungsbeispiel werden zumindest drei Messungen an unterschiedlichen Orten durchgeführt, so dass ein erster, ein zweiter und ein dritter Kreisringabschnitt entsteht, wobei der Ort, von dem aus die zweite Messung durchgeführt wird, zwischen dem ersten und dritten Ort liegt, wobei der erste Kreisringabschnitt sukzessive auf Basis des zweiten und des dritten Kreisringabschnitts eingeschränkt wird, und zwar:
- dass der erste Kreisringabschnitt zunächst auf einen reduzierten ersten Kreisringabschnittbereich beschränkt wird, und zwar basierend auf dem Berührpunkt einer ersten Tangente, die an den äußeren Kreisabschnitten des ersten und zweiten Kreisringabschnitts anliegt, mit dem äußeren Kreisabschnitt des ersten Kreisringabschnitts und dem Berührpunkt einer dritten Tangente, die an den inneren Kreisabschnitt des ersten Kreisringabschnitts und den äußeren Kreisabschnitt des zweiten Kreisringabschnitts anliegt, mit dem inneren Kreisabschnitt des ersten Kreisringabschnitts; und
- dass der erste Kreisringabschnitt anschließend auf einen weiter reduzierten ersten Kreisringabschnittbereich beschränkt wird, und zwar basierend auf dem Berührpunkt einer vierten Tangente, die an dem äußeren Kreisabschnitt des ersten Kreisringabschnitts und dem äußeren Kreisabschnitt des dritten Kreisringabschnitts anliegt, mit dem äußeren Kreisabschnitt des ersten Kreisringabschnitts und dem Berührpunkt einer fünften Tangente, die an den inneren Kreisabschnitt des ersten Kreisringabschnitts und den äußeren Kreisabschnitt des dritten Kreisringabschnitts anliegt, mit dem inneren Kreisabschnitt des ersten Kreisringabschnitts.

Auch hier werden die vorgenannten Paare von Berührpunkten vorzugsweise durch eine Gerade oder eine gekrümmte Verbindungslinie miteinander verbunden, um den Kreisringabschnitt umfangsseitig zu beschränken. Durch die iterative Anwendung des Verfahrens und die Einschränkung des Lösungsraums durch zwei oder mehrere Messungen, die an unterschiedlichen Orten, beispielsweise an mehreren in Fahrtrichtung des Fahrzeugs aufeinanderfolgenden Orten vorgenommen wurden, kann eine sehr präzise Eingrenzung des Lösungsraums vorgenommen werden.

Gemäß einem Ausführungsbeispiel erfolgt die Beschränkung des Kreisringabschnitts einer ersten Messung basierend auf den Kreisringabschnitten von mehr als zwei weiteren Messungen. Dadurch kann die Eingrenzung des Lösungsraums weiter verbessert werden.

Gemäß einem Ausführungsbeispiel entstehen durch das Einschränken der Kreisringabschnitte mehrerer Messungen, die an unterschiedlichen Orten aufgenommen wurden, eine Vielzahl von reduzierten Kreisringabschnittbereichen. Die reduzierten Kreisringabschnittbereiche werden zumindest teilweise miteinander zu einem schlauchartigen Lösungsraum verbunden, wenn die einzelnen reduzierten Kreisringabschnittbereiche jeweils eine in Umfangsrichtung gemessene Größenschwelle unterschritten haben. Die Größenschwelle kann in Abhängigkeit von der Messunsicherheitsinformation gewählt werden. Der schlauchartige Lösungsraum wird vorzugsweise derart gewählt, dass dieser eine Breite aufweist, die an die Breite der reduzierten Kreisringabschnittbereiche angepasst ist und eine Längserstreckung aufweist, die durch die äußersten, reduzierten Kreisringabschnittbereiche festgelegt ist.

Gemäß einem weiteren Aspekt betrifft die Erfindung ein System zur Bestimmung der Position und der zumindest abschnittsweisen Form eines Objekts im Umgebungsbereich eines Fahrzeugs. Das Fahrzeug umfasst eine Sensorik mit zumindest einem entfernungsmessenden Sensor und eine Recheneinheit zur Steuerung der Sensorik und Auswertung der Messinformationen, die durch die Sensorik bereitgestellt werden. Die Rechnereinheit ist dazu konfiguriert, die folgenden Schritte auszuführen:
- Durchführen mehrerer zeitlich aufeinanderfolgender Sende-Empfangszyklen durch die Sensorik, wobei jeder Sende-Empfangszyklus das Aussenden eines Messsignals durch zumindest einen Sensor und das Empfangen eines reflektierten Anteils dieses Messsignals durch den Sensor umfasst;
- Bestimmen eines Kreisringabschnitts, in dem ein Objektabschnitt des Objekts liegt, an dem eine Reflexion des Messsignals erfolgt, pro Sende-Empfangszyklus basierend auf der Laufzeit zwischen dem Aussenden des Messignals und dem Empfangen eines reflektierten Anteils dieses Messsignals und einer Messunsicherheitsinformation, wobei der Kreisringabschnitt, einen inneren Kreisabschnitt und einen äußeren Kreisabschnitt aufweist und wobei der Abstand des inneren Kreisabschnitts und des äußeren Kreisabschnitts durch die Messunsicherheitsinformation festgelegt wird;
- Auswählen zumindest eines ersten und eines zweiten Kreisringabschnitts, wobei der erste und der zweite Kreisringabschnitt auf Reflektionen an einem gemeinsamen Objekt basieren;
- Bilden einer ersten Tangente an die äußeren Kreisabschnitte des ersten und zweiten Kreisringabschnitts, einer zweiten Tangente an den äußeren Kreisabschnitt des ersten Kreisringabschnitts und den inneren Kreisabschnitt des zweiten Kreisringabschnitts und einer dritten Tangente an den inneren Kreisabschnitt des ersten Kreisringabschnitts und den äußeren Kreisabschnitt des zweiten Kreisringabschnitts;
- Beschränken des ersten Kreisringabschnitts auf einen reduzierten ersten Kreisringabschnittbereich basierend auf dem Berührpunkt der ersten Tangente mit dem äußeren Kreisabschnitt des ersten Kreisringabschnitts und dem Berührpunkt der dritten Tangente mit dem inneren Kreisabschnitt des ersten Kreisringabschnitts und/oder Beschränken des zweiten Kreisringabschnitts auf einen reduzierten zweiten Kreisringabschnittbereich basierend auf dem Berührpunkt der ersten Tangente mit dem äußeren Kreisabschnitt des zweiten Kreisringabschnitts und dem Berührpunkt der zweiten Tangente mit dem inneren Kreisabschnitt des zweiten Kreisringabschnitts; und
- Bestimmen der Position und der zumindest abschnittsweisen Form des Objekts basierend auf dem reduzierten ersten Kreisringabschnittbereich und/oder dem reduzierten zweiten Kreisringabschnittbereich.

Die für das erfindungsgemäße Verfahren beschriebenen Vorteile und Ausführungsbeispiele gelten entsprechend auch für das erfindungsgemäße System.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine Draufsichtdarstellung eines Fahrzeugs mit einem Umgebungserfassungssystem, das mehrere Sensoren aufweist;
- Fig. 2: beispielhaft eine schematische Darstellung von Kreisringabschnitten als Erfassungsbereiche eines oder mehrerer Sensoren, die an den Positionen p1 und p2 Umgebungsbereiche erfassen;
- Fig. 3: beispielhaft eine schematische Darstellung eines ersten Beispiels zweier Messungen an den Positionen p1 und p2, den dadurch entstehenden Kreisringabschnitten und deren umfangsseitige Begrenzung durch Tangenten und Schnittpunkte;
- Fig. 4: beispielhaft eine schematische Darstellung eines zweiten Beispiels zweier Messungen an den Positionen p1 und p2, den dadurch entstehenden Kreisringabschnitten und deren umfangsseitige Begrenzung durch Tangenten;
- Fig. 5: beispielhaft eine schematische Darstellung eines dritten Beispiels zweier Messungen an den Positionen p1 und p2, den dadurch entstehenden Kreisringabschnitten und deren umfangsseitige Begrenzung durch Tangenten;
- Fig. 6: beispielhaft und schematisch die Einschränkung des Lösungsraums einer Messung durch zwei diese Messung randseits begrenzende weitere Messungen;
- Fig. 7: beispielhaft und schematisch die Einschränkung des Lösungsraums einer Messung durch zwei weitere Messungen, wobei diese Messungen in einer Richtung, beispielsweise in Fahrtrichtung des Fahrzeugs, aufeinander folgen;
- Fig. 8: beispielhaft und schematisch die Bildung eines schlauchartigen Lösungsraums durch mehrere reduzierte Kreisringabschnittbereiche;
- Fig. 9: beispielhaft und schematisch die Erfassung eines geraden Objekts mittels einer Kette von fünf Messungen;
- Fig. 10: beispielhaft und schematisch die Erfassung eines Objekts mit einer konvex ausgebildeten Ecke mittels einer Kette von fünf Messungen; und
- Fig. 11: beispielhaft ein Blockdiagramm, das die Verfahrensabläufe des Verfahrens zur Bestimmung der Position und der zumindest abschnittsweisen Form eines Objekts verdeutlicht.

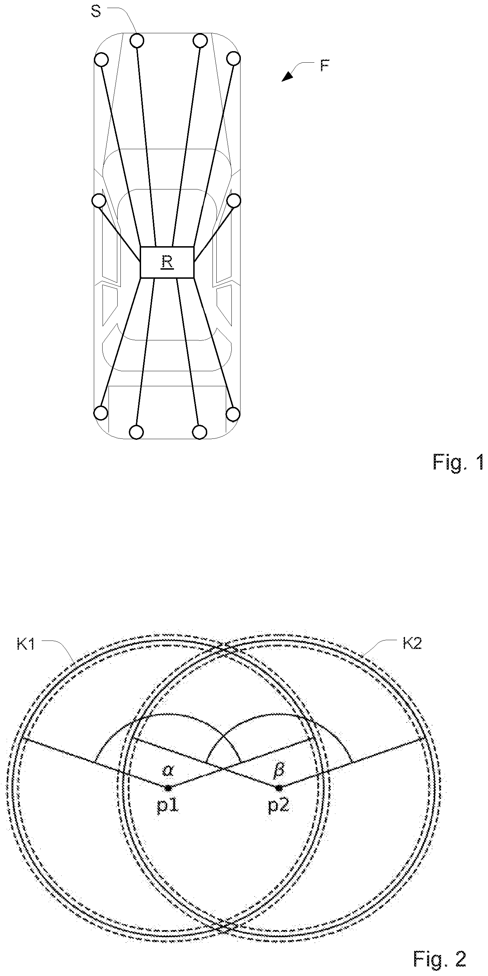

Figur 1 zeigt beispielhaft und grob schematisch ein Fahrzeug **F,** das eine Vielzahl von Sensoren S aufweist. Diese sind in Fig. 1 als Kreise angedeutet. Vorzugsweise weist das Fahrzeug F mehrere Sensoren S auf, die um das Fahrzeug F herum verteilt vorgesehen sind. Die Sensoren S können insbesondere entfernungsmessende Sensoren sein, beispielsweise Ultraschallsensoren. Alternativ können die Sensoren S auch Radarsensoren sein. Vorzugsweise weisen die Sensoren S jedoch nicht die Fähigkeit auf, die Richtung zu bestimmen, aus der ein empfangener, reflektierter Signalanteil des Sendesignals stammt. Derartige Sensoren werden häufig als 1-D-Sensoren bezeichnet. Die Bestimmung der Entfernung eines Objekts, an dem die Reflexion auftritt, kann basierend auf der Laufzeit zwischen dem Sendezeitpunkt und dem Empfangszeitpunkt erfolgen.

Die Sensoren sind mit einer Rechnereinheit R gekoppelt, die zumindest einen Prozessor und zumindest eine Speichereinheit aufweist. Diese Rechnereinheit R ist dazu ausgebildet, die in diesem Dokument offenbarten Verfahrensabläufe durchzuführen und damit die Position und die zumindest abschnittsweise Form eines Objekts zu bestimmen.

Fig. 2 zeigt grob schematisch das Vollziehen von zwei Messungen an den Positionen p1 und p2. Die Messungen können entweder durch einen einzigen Sensor S durchgeführt werden, der sich aufgrund der Fahrzeugbewegung an aufeinanderfolgenden Zeitpunkten an den Positionen p1 und p2 befindet. Alternativ können die Messungen aber auch von zwei Sensoren S des Fahrzeugs F durchgeführt werden, beispielsweise auch gleichzeitig, wobei die Sensoren S an unterschiedlichen Positionen am Fahrzeug F angeordnet sind.

Wird bei entfernungsmessenden Sensoren S nach einer Laufzeit eine Reflexion empfangen, kann das Objekt, das diese Reflexion verursacht hat, auf einem Kreis um die Position p1, p2 des Sensors S liegen, wobei sich der Radius des Kreises aus der Laufzeit des Signals zwischen dem Aussenden des Signals und dem Empfangen des reflektierten Signals ergibt. Der durchgezogen gezeichnete Kreis in Fig. 2 gibt den Abstand an, den das Objekt zum Sensor gemäß der gemessenen Laufzeit hat.

Da der zumindest eine Sensor S typischerweise einen Erfassungsbereich mit einem Erfassungswinkel α, β aufweist, lässt sich die Lage des reflektierenden Objekts zunächst auf einen Kreissektor mit dem Winkel α bzw. β gemäß Fig. 2 eingrenzen. In anderen Worten bedeutet dies, dass das reflektierende Objekt auf einem Kreisabschnitt des jeweiligen Kreises liegt, der umfangsseitig durch die Winkel α bzw. β begrenzt wird.

Neben dem durchgezogen gezeichneten Kreis in Fig. 2 sind zudem noch zwei weitere, gestrichelt gezeichnete Kreise gezeigt, wobei ein erster gestrichelter Kreis einen kleineren Radius aufweist als der durchgezogen gezeichnete Kreis und ein zweiter gestrichelter Kreis einen größeren Radius aufweist als der durchgezogen gezeichnete Kreis. Die Differenz der Radien der gestrichelt gezeichneten Kreise zu dem durchgezogen gezeichneten Kreis ergibt sich aufgrund von Messungenauigkeiten. Die Radiendifferenz ergibt sich beispielsweise aus der Standardabweichung der statistischen Verteilung, die sich aufgrund der Messungenauigkeiten ergibt. Unter Berücksichtigung der Messungenauigkeiten kann das reflektierende Objekt auf einem Kreisringabschnitt K1, K2 liegen, der umfangsseitig aufgrund des Erfassungsbereichs des Sensors S beschränkt ist (Winkel α, β) und in radialer Richtung durch einen Innenrand mit einem Innenradius, der dem ermittelten Radius abzüglich der Messungenauigkeit entspricht, und durch einen Außenrand mit einem dem Außenradius, der dem ermittelten Radius zuzüglich der Messungenauigkeit entspricht, begrenzt ist.

Um eine genauere Lokalisierung eines Objekts durch die Sensorik vornehmen zu können, wird nachfolgend ein Verfahren beschrieben, das eine weitere Einschränkung des Kreisringabschnitts unter Berücksichtigung weiterer Messungen ermöglicht.

Im Folgenden wird davon ausgegangen, dass die einzelnen Messungen bereits miteinander assoziiert wurden, d.h. sich die Informationen, die durch die Messungen erhalten wurden, aufgrund von Reflexionen an einem einzigen Objekt entstehen.

Zudem wird davon ausgegangen, dass die Reflexionen an dem Objekt O entweder an konvexen oder geraden Flächen auftreten, nicht aber an konkaven Flächen.

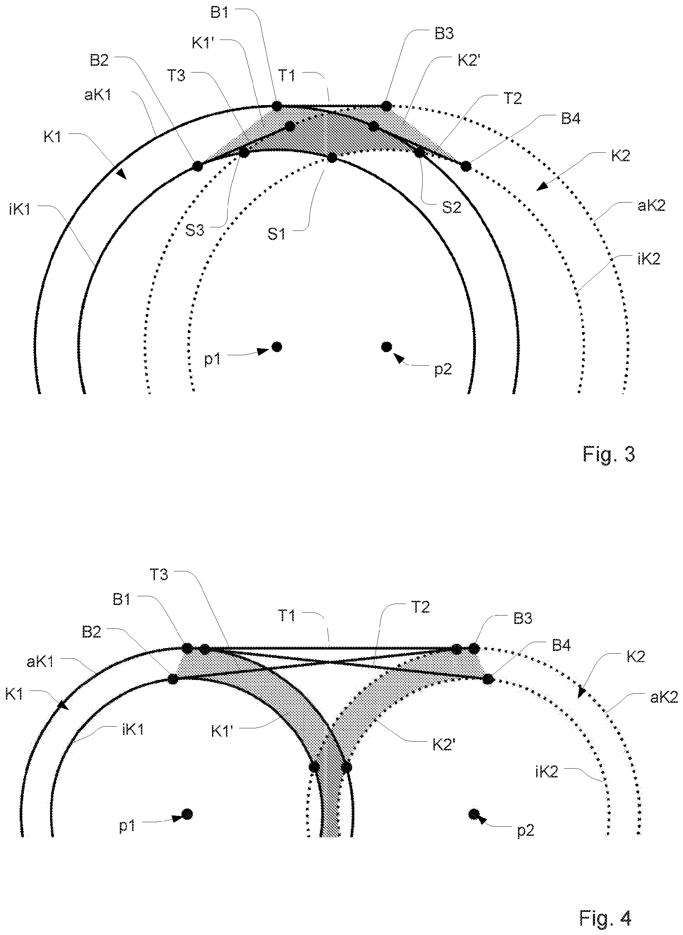

Fig. 3 bis 5 zeigen mehrere unterschiedliche Messsituationen und die in diesen Messsituationen entstehenden Messungspaare mit den ihnen zugeordneten Kreisringabschnitten K1, K2. Dabei sind der erste Kreisringabschnitt K1 jeweils durch eine Messung an dem Punkt p1 und der zweite Kreisringabschnitt K2 jeweils durch eine Messung an dem Punkt p2 erhalten worden.

Für die erste Messung am Punkt p1 wird ein Kreisringabschnitt K1 erhalten, der unter Berücksichtigung der Messungenauigkeiten durch einen inneren Kreisabschnitt iK1 und einen äußeren Kreisabschnitt aK1 um den Punkt p1 herum charakterisiert ist. Ebenso wird für die zweite Messung am Punkt p2 ein Kreisringabschnitt K2 erhalten, der unter Berücksichtigung der Messungenauigkeiten durch einen inneren Kreisabschnitt iK2 und einen äußeren Kreisabschnitt aK2 um den Punkt p2 herum charakterisiert ist. Die Kreisringabschnitte K1, K2 sind typischerweise durch den Erfassungswinkel der Sensoren S eingeschränkt, was in den Figuren 3 bis 5 nicht dargestellt bzw. berücksichtigt ist.

Werden die beiden Messungen in Beziehung gesetzt, lassen sich die Kreisringabschnitte K1, K2 beschränken, d.h. der Lösungsraum, in dem eine Reflexion bei der jeweiligen Messung aufgetreten ist, lässt sich durch die zumindest eine weitere Messung eingrenzen.

Unter Berücksichtigung der Tatsache, dass eine Gerade das Element darstellt, das die Grenze zwischen einer konvex und einer konkav geformten Linie darstellt, und die Reflexion an keiner konkav gewölbten Fläche des Objekts O aufgetreten sein soll, können die Kreisringabschnitte K1, K2 durch Tangenten eingegrenzt werden.

Die Tangente T1 in den Figuren 3 bis 5 ist derart gewählt, dass sie eine Tangente an die beiden äußeren Kreisabschnitte aK1, aK2 bildet. Die Tangente T1 berührt den äußeren Kreisabschnitt aK1 am Berührpunkt B1 und den äußeren Kreisabschnitt aK2 am Berührpunkt B3.

Die Tangente T2 ist derart gewählt, dass diese eine Tangente an den äußeren Kreisabschnitt aK1 und den inneren Kreisabschnitt iK2 bildet. Die Tangente T2 berührt den inneren Kreisabschnitt iK2 am Berührpunkt B4.

Die Tangente T3 ist derart gewählt, dass diese eine Tangente an den äußeren Kreisabschnitt aK2 und den inneren Kreisabschnitt iK1 bildet. Die Tangente T3 berührt den inneren Kreisabschnitt iK1 am Berührpunkt B2.

Basierend auf diesen Tangenten T1, T2, T3 und den daraus resultierenden Berührpunkten B1, B2, B3, B4 lassen sich die Kreisringabschnitte K1, K2 eingrenzen.

Der erste Kreisringabschnitt K1 kann umfangsseitig zur einen Seite hin durch den ersten Berührpunkt B1 und den zweiten Berührpunkt B2 eingegrenzt werden. Dies erfolgt durch eine Verbindungslinie zwischen den Berührpunkten B1 und B2. Die Verbindungslinie kann eine Gerade oder aber auch eine gewölbte Linie sein. Zur anderen Seite hin wird der erste Kreisringabschnitt K1 in der Messung gemäß Fig. 3 basierend auf dem Schnittpunkt S1 des inneren Kreisabschnitts iK1 mit dem inneren Kreisabschnitt iK2 und dem Schnittpunkt S2 des äußeren Kreisabschnitts aK1 mit dem inneren Kreisabschnitt iK2 beschränkt, und zwar durch den zwischen diesen Schnittpunkten verlaufenden Abschnitt des inneren Kreisabschnitts iK2. Dadurch entsteht der reduzierte erste Kreisringabschnittsbereich K1' (in Fig. 3 durch den hellgrau gekennzeichneten, linken Bereich und den dunkelgrau gekennzeichneten Bereich gebildet).

Ebenso kann der zweite Kreisringabschnitt K2 umfangsseitig zur einen Seite hin durch den dritten Berührpunkt B3 und den vierten Berührpunkt B4 eingegrenzt werden. Dies erfolgt durch eine Verbindungslinie zwischen den Berührpunkten B3 und B4. Die Verbindungslinie kann eine Gerade oder aber auch eine gewölbte Linie sein. Zur anderen Seite hin wird der zweite Kreisringabschnitt K2 in der Messung gemäß Fig. 3 basierend auf dem Schnittpunkt S1 des inneren Kreisabschnitts iK1 mit dem inneren Kreisabschnitt iK2 und dem Schnittpunkt S3 des äußeren Kreisabschnitts aK2 mit dem inneren Kreisabschnitt iK1 beschränkt, und zwar durch den zwischen diesen Schnittpunkten verlaufenden Abschnitt des inneren Kreisabschnitts iK1. Dadurch entsteht der reduzierte erste Kreisringabschnittsbereich K2' (in Fig. 3 durch den hellgrau gekennzeichneten, rechten Bereich und den dunkelgrau gekennzeichneten Bereich gebildet).

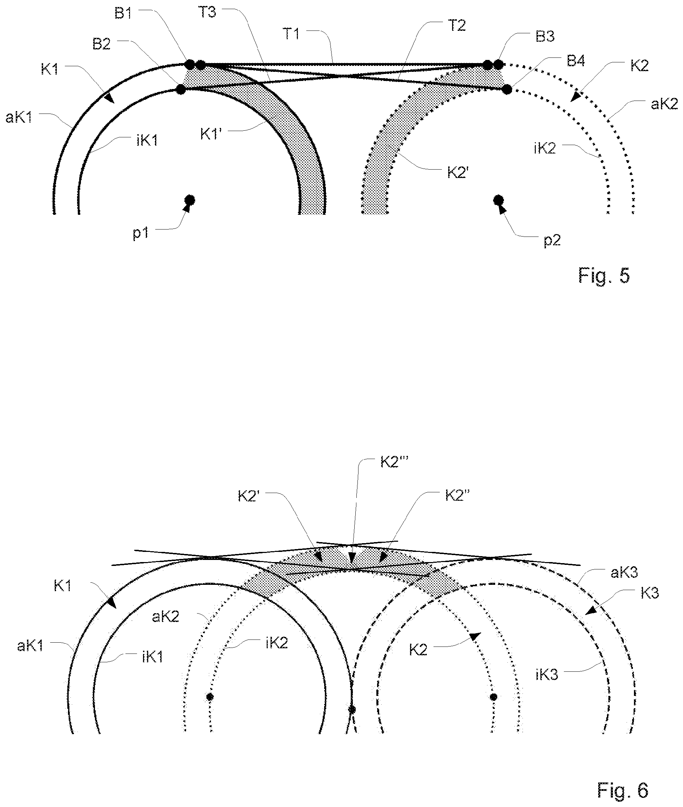

Die Messungen in den Figuren 4 und 5 liegen weiter auseinander als die Messungen in Fig. 3. Insbesondere bei einem Abstand der Messungen derart, dass sich die inneren Kreisabschnitte iK1, iK2 nicht mehr schneiden, bilden sich keine Schnittpunkte mehr, die die Kreisringabschnitte umfangsseitig beschränken. Dadurch können die Kreisringabschnitte K1, K2 jeweils lediglich zu einer Seite hin umfangsseitig begrenzt werden, und zwar auf Basis der Berührpunkte B1, B2, B3, B4, die sich aufgrund der Tangenten T1, T2 und T3 bilden.

Vorzugsweise werden mehr als zwei Messungen miteinander in Beziehung gebracht, wodurch sich der Lösungsraum von Messungen, die zu beiden Seiten hin von weiteren Messungen umgeben sind, weiter eingrenzen lässt.

Fig. 6 zeigt beispielhaft und schematisch eine derartige Erfassungssituation. Durch eine erste Messung wird der erste Kreisringabschnitt K1, durch eine zweite Messung der zweite Kreisringabschnitt K2 und durch eine dritte Messung der dritte Kreisringabschnitt K3 erhalten. Die Messungen werden vorzugsweise zeitlich nacheinander bei Bewegung des Fahrzeugs F relativ zum Objekt O vollzogen.

Das zuvor in Bezug auf die Figuren 3 bis 5 beschriebene Verfahren wird vorzugsweise sequentiell angewendet, und zwar zur Bestimmung eines reduzierten zweiten Kreisringabschnittbereichs K2' unter Berücksichtigung von Informationen der ersten und zweiten Messung. Mehr im Detail wird der zweite Kreisringabschnitt K2 umfangsseitig dadurch eingeschränkt, dass die Berührpunkte von Tangenten zwischen dem äußeren Kreisabschnitt aK1 des ersten Kreisringabschnitts K1 mit dem äußeren Kreisabschnitt aK2 und dem inneren Kreisabschnitt iK2 des zweiten Kreisringabschnitts K2 bestimmt werden. Durch diese Berührpunkte wird der reduzierte zweite Kreisringabschnittbereich K2' erhalten.

In gleicher Weise werden die zweite und dritte Messung in Beziehung gesetzt und der zweite Kreisringabschnitt K2 unter Berücksichtigung der zweiten und dritten Messung auf einen weiteren reduzierten zweiten Kreisringabschnittbereich K2" beschränkt. Mehr im Detail wird der zweite Kreisringabschnitt K2 umfangsseitig dadurch eingeschränkt, dass die Berührpunkte von Tangenten zwischen dem äußeren Kreisabschnitt aK3 des dritten Kreisringabschnitts K3 mit dem äußeren Kreisabschnitt aK2 und dem inneren Kreisabschnitt iK2 des zweiten Kreisringabschnitts K2 bestimmt werden. Durch diese Berührpunkte wird der weitere reduzierte zweite Kreisringabschnittbereich K2" erhalten.

Auf Basis der beiden Kreisringabschnittbereiche K2', K2" kann eine weitere Eingrenzung des Lösungsraums der zweiten Messung erfolgen, und zwar durch Eingrenzung des zweiten Kreisringabschnitts K2 auf die Schnittmenge (d.h. der Überlappungsbereich) der beiden Kreisringabschnittbereiche K2', K2". Diese Schnittmenge ist in Fig. 6 mit K2‴ bezeichnet.

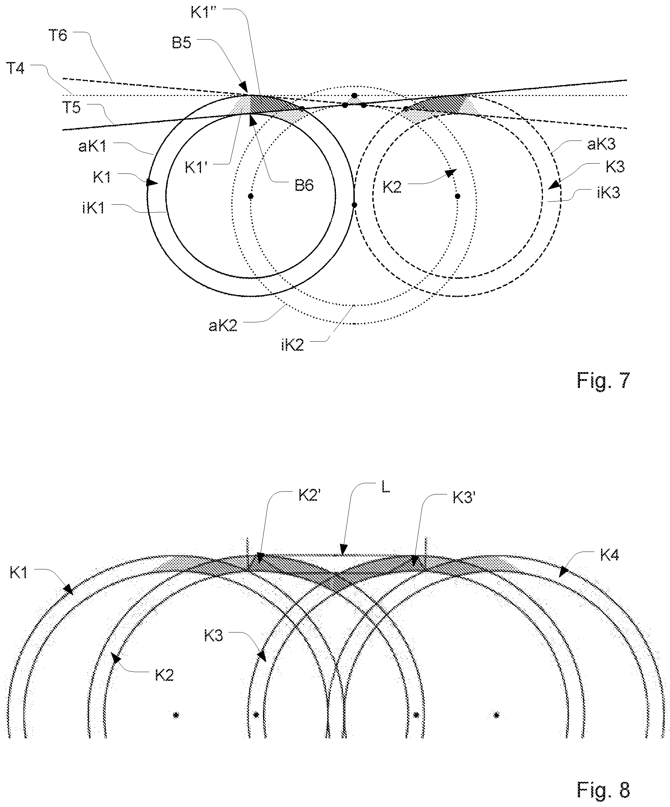

Fig. 7 zeigt beispielhaft und schematisch, wie eine weitere Eingrenzung des Lösungsraums der randseitigen Messungen, d.h. im gezeigten Ausführungsbeispiel der Kreisringabschnitte K1 und K3 erfolgen kann. Auch in Fig. 7 wird durch eine erste Messung wird der erste Kreisringabschnitt K1, durch eine zweite Messung der zweite Kreisringabschnitt K2 und durch eine dritte Messung der dritte Kreisringabschnitt K3 erhalten. Die Messungen werden vorzugsweise zeitlich nacheinander bei Bewegung des Fahrzeugs F relativ zum Objekt O vollzogen.

Der reduzierte erste Kreisringabschnittbereich K1' (die hellgrau und dunkelgrau gekennzeichneten Bereiche zusammen) wird unter Berücksichtigung der Informationen aus der ersten und zweiten Messung erhalten, wie dies zuvor im Zusammenhang mit den Figuren 3 bis 5 erläutert wurde.

Nach dem Empfang der weiteren Informationen aus der dritten Messung kann basierend auf dem dritten Kreisringabschnitt K3 eine weitere Eingrenzung des ersten Kreisringabschnittbereichs K1' erfolgen. Die weitere Eingrenzung kann durch die Tangenten T4, T5 und T6 erfolgen, die zwischen dem ersten Kreisringabschnitt K1 und dem dritten Kreisringabschnitt K3 gebildet werden.

Die Tangente T4 wird zwischen den äußeren Kreisabschnitten aK1 und aK3 des ersten und dritten Kreisringabschnitts K1, K3 gebildet. Die Tangente T4 bildet mit dem äußeren Kreisabschnitt aK1 des ersten Kreisringabschnitts K1 den Berührpunkt B5 aus.

Die Tangente T5 bildet eine Tangente an den inneren Kreisabschnitt iK1 und den äußeren Kreisabschnitt aK3 des ersten und dritten Kreisringabschnitts K1, K3. Die Tangente T5 bildet mit dem inneren Kreisabschnitt iK1 des ersten Kreisringabschnitts K1 den Berührpunkt B6 aus.

Durch eine Verbindungslinie, insbesondere eine Verbindungsgerade zwischen den Berührpunkten B5 und B6 kann die Lösungsmenge der ersten Messung, d.h. der erste Kreisringabschnitt K1 weiter eingegrenzt werden, und zwar auf den weiter reduzierten ersten Kreisringabschnittbereich K1" (d.h. der dunkelgrau gekennzeichnete Bereich).

In analoger Weise ist eine weitere Eingrenzung des Lösungsraums der dritten Messung, d.h. des dritten Kreisringabschnitts K3 möglich, und zwar unter Berücksichtigung der Berührpunkte, die sich aufgrund der in Fig. 7 gezeigten Tangenten T4 und T6 gegenüber dem äußeren Kreisabschnitt aK3 und dem inneren Kreisabschnitt iK3 des dritten Kreisringabschnitts K3 ausbilden.

Durch die sukzessive Anwendung des vorbeschriebenen Verfahrens lassen sich die Lösungsräume der Einzelmessungen derart eingrenzen, dass Objektkonturen mit hoher Genauigkeit lokalisiert werden können.

Fig. 8 zeigt beispielhaft die Kreisringabschnitte K1, K2, K3, K4 von vier Messungen, wobei der reduzierte zweite Kreisringabschnittbereich K2' der zweiten Messung und der reduzierte dritte Kreisringabschnittbereich K3' der dritten Messung gekennzeichnet sind. Haben die reduzierten Kreisringabschnittbereiche K2', K3' eine in Umfangsrichtung gemessene Größenschwelle unterschritten, beispielsweise eine Größenschwelle die beispielsweise maximal doppelt so groß gewählt ist wie die radiale Breite der Kreisringabschnitte K1, K2, K3, K4, vorzugsweise aber gleich oder im Wesentlichen gleich der radialen Breite der Kreisringabschnitte K1, K2, K3, K4, können die reduzierten Kreisringabschnittbereiche zu einem schlauchartigen Lösungsraum L zusammengefasst werden, wie dies in Fig. 8 gezeigt ist. Der Lösungsraum L gibt dabei an, dass ein Bereich des Objekts O sich innerhalb des gesamten Lösungsraums L befinden kann. Der Lösungsraum L kann beispielsweise korridorartig ausgebildet sein und in seiner Ausdehnung in einer ersten Richtung durch die Erstreckung der reduzierten Kreisringabschnittbereiche K2', K3' in radialer Richtung und in einer quer zur ersten Richtung verlaufenden zweiten Richtung durch die äußeren Enden der reduzierten Kreisringabschnittbereiche K2', K3' begrenzt werden, die dies durch die senkrechten Linien in Fig. 8 angedeutet ist.

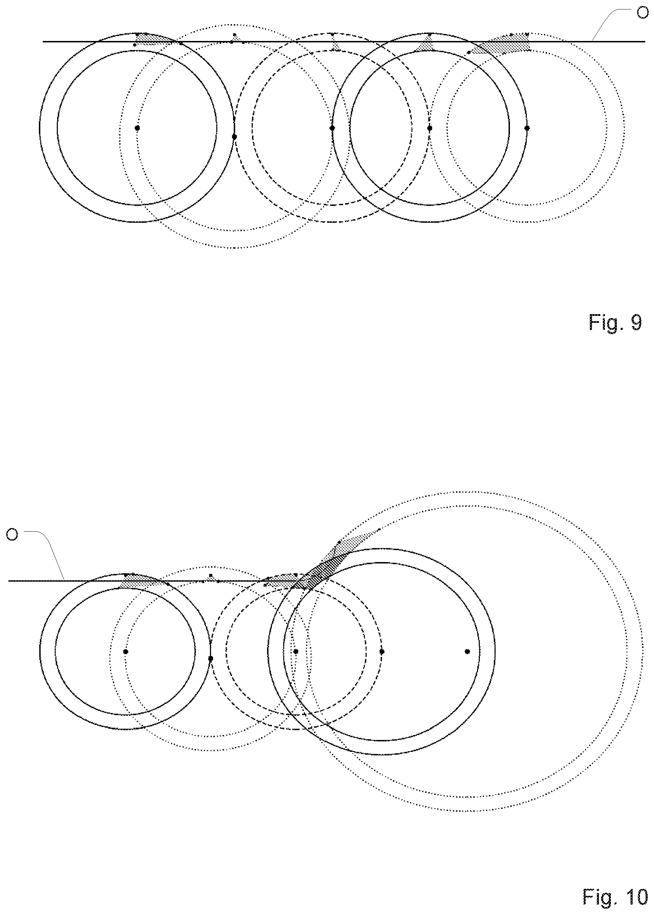

Fig. 9 und 10 zeigen beispielhaft erste bis fünfte Messungen, die diesen Messungen zugeordneten Kreisringabschnitte und die jeweiligen Lösungsmengen bzw. reduzierten Kreisringabschnittbereiche, die sich unter Berücksichtigung der Ergebnisse der weiteren Messungen gemäß dem vorbeschriebenen Verfahren ergeben. Es wird deutlich, dass die Einschränkung des Lösungsraums eine relativ genaue Aussage über die Position und die abschnittsweise Form des Objekts O treffen lässt.

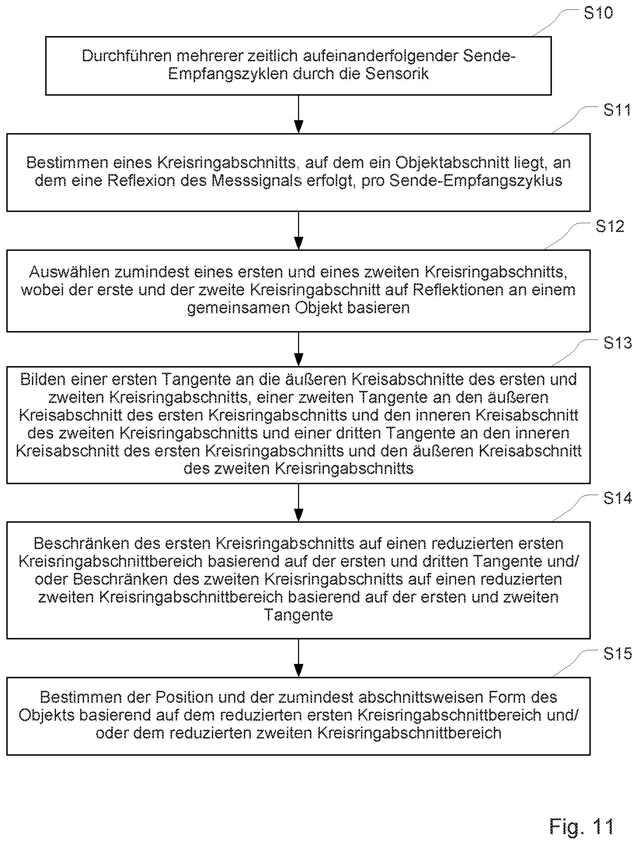

Fig. 11 zeigt ein Diagramm, das die Verfahrensschritte zur Bestimmung der Position und der zumindest abschnittsweisen Form eines Objekts verdeutlicht.

Zunächst werden mehrere zeitlich aufeinanderfolgende Sende-Empfangszyklen durch die Sensorik durchgeführt (S10). Jeder Sende-Empfangszyklus umfasst das Aussenden eines Messsignals durch zumindest einen Sensor und das Empfangen eines reflektierten Anteils dieses Messsignals durch den Sensor.

Anschließend wird pro Sende-Empfangszyklus ein Kreisringabschnitt bestimmt, in dem ein Objektabschnitt des Objekts liegt, an dem eine Reflexion des Messsignals erfolgt (S11). Der Kreisringabschnitt wird basierend auf der Laufzeit zwischen dem Aussenden des Messignals und dem Empfangen eines reflektierten Anteils dieses Messsignals und einer Messunsicherheitsinformation bestimmt. Der Kreisringabschnitt weist einen inneren Kreisabschnitt und einen äußeren Kreisabschnitt auf, wobei der Abstand des inneren Kreisabschnitts und des äußeren Kreisabschnitts durch die Messunsicherheitsinformation festgelegt wird.

Nach dem Durchführen mehrerer Messungen, die zu unterschiedlichen Kreisringabschnitten führen, wird zumindest ein erster und ein zweiter Kreisringabschnitt ausgewählt, wobei der erste und der zweite Kreisringabschnitt auf Reflektionen an einem gemeinsamen Objekt basieren (S12).

Anschließend wird eine erste Tangente an die äußeren Kreisabschnitte des ersten und zweiten Kreisringabschnitts, eine zweite Tangente an den äußeren Kreisabschnitt des ersten Kreisringabschnitts und den inneren Kreisabschnitt des zweiten Kreisringabschnitts und eine dritte Tangente an den inneren Kreisabschnitt des ersten Kreisringabschnitts und den äußeren Kreisabschnitt des zweiten Kreisringabschnitts gebildet (S13).

Daraufhin wird der erste Kreisringabschnitt auf einen reduzierten ersten Kreisringabschnittbereich basierend auf dem Berührpunkt der ersten Tangente mit dem äußeren Kreisabschnitt des ersten Kreisringabschnitts und dem Berührpunkt der dritten Tangente mit dem inneren Kreisabschnitt des ersten Kreisringabschnitts beschränkt. Alternativ oder zusätzlich wird der zweite Kreisringabschnitt auf einen reduzierten zweiten Kreisringabschnittbereich basierend auf dem Berührpunkt der ersten Tangente mit dem äußeren Kreisabschnitt des zweiten Kreisringabschnitts und dem Berührpunkt der zweiten Tangente mit dem inneren Kreisabschnitt des zweiten Kreisringabschnitts beschränkt (S14).

Zuletzt wird die Position und die zumindest abschnittsweise Form des Objekts basierend auf dem reduzierten ersten Kreisringabschnittbereich und/oder dem reduzierten zweiten Kreisringabschnittbereich bestimmt (S15).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- aK1, aK2, aK3: äußerer Kreisabschnitt
- B1, B2, B3, B4, B5, B6: Berührpunkt
- F: Fahrzeug
- iK1, iK2, iK3: innerer Kreisabschnitt
- K1, K2, K3: Kreisringabschnitt
- K1', K2', K3', K4', K5': reduzierter Kreisringabschnittsbereich
- K1": weiter reduzierter erster Kreisringabschnittsbereich
- K2": weiterer reduzierter zweiter Kreisringabschnittsbereich
- K2‴: Schnittmenge aus K2' und K2"
- KA1, KA2: Kreisabschnitt
- L: Lösungsraum
- O: Objekt
- P1, P2: Punkt
- R: Recheneinheit
- S: Sensor
- S1, S2, S3: Schnittpunkt
- T1: erste Tangente
- T2: zweite Tangente
- T3: dritte Tangente
- T4: vierte Tangente
- T5: fünfte Tangente
- T6: sechste Tangente

- α, β: Erfassungswinkel

## Patentansprüche

1. Verfahren zur Bestimmung der Position und der zumindest abschnittsweisen Form eines Objekts (O) durch eine Sensorik eines Fahrzeugs (F), wobei die Sensorik des Fahrzeugs (F) zumindest einen entfernungsmessenden Sensor (S) aufweist, wobei das Verfahren die folgenden Schritte aufweist:
- Durchführen mehrerer zeitlich aufeinanderfolgender Sende-Empfangszyklen durch die Sensorik (S10), wobei jeder Sende-Empfangszyklus das Aussenden eines Messsignals durch zumindest einen Sensor (S) und das Empfangen eines reflektierten Anteils dieses Messsignals durch den Sensor (S) umfasst;
- Bestimmen eines Kreisringabschnitts (K1, K2, K3), in dem ein Objektabschnitt des Objekts (O) liegt, an dem eine Reflexion des Messsignals erfolgt, pro Sende-Empfangszyklus basierend auf der Laufzeit zwischen dem Aussenden des Messignals und dem Empfangen eines reflektierten Anteils dieses Messsignals und einer Messunsicherheitsinformation (S11), wobei der Kreisringabschnitt (K1, K2, K3), einen inneren Kreisabschnitt (iK1, iK2, iK3) und einen äußeren Kreisabschnitt (aK1, aK2, aK3) aufweist und wobei der Abstand des inneren Kreisabschnitts (iK1, iK2, iK3) und des äußeren Kreisabschnitts (aK1, aK2, aK3) durch die Messunsicherheitsinformation festgelegt wird;
- Auswählen zumindest eines ersten und eines zweiten Kreisringabschnitts (K1, K2), wobei der erste und der zweite Kreisringabschnitt (K1, K2) auf Reflektionen an einem gemeinsamen Objekt (O) basieren (S12);
- Bilden einer ersten Tangente (T1) an die äußeren Kreisabschnitte (aK1, aK2) des ersten und zweiten Kreisringabschnitts (K1, K2), einer zweiten Tangente (T2) an den äußeren Kreisabschnitt (aK1) des ersten Kreisringabschnitts (K1) und den inneren Kreisabschnitt (iK2) des zweiten Kreisringabschnitts (K2) und einer dritten Tangente (T3) an den inneren Kreisabschnitt (iK1) des ersten Kreisringabschnitts (K1) und den äußeren Kreisabschnitt (aK2) des zweiten Kreisringabschnitts (K2) (S13);
- Beschränken des ersten Kreisringabschnitts (K1) auf einen reduzierten ersten Kreisringabschnittbereich (K1') basierend auf dem Berührpunkt (B1) der ersten Tangente (T1) mit dem äußeren Kreisabschnitt (aK1) des ersten Kreisringabschnitts (K1) und dem Berührpunkt (B2) der dritten Tangente (T3) mit dem inneren Kreisabschnitt (iK1) des ersten Kreisringabschnitts (K1) und/oder Beschränken des zweiten Kreisringabschnitts (K2) auf einen reduzierten zweiten Kreisringabschnittbereich (K2') basierend auf dem Berührpunkt (B3) der ersten Tangente (T1) mit dem äußeren Kreisabschnitt (aK2) des zweiten Kreisringabschnitts (K2) und dem Berührpunkt (B4) der zweiten Tangente (T2) mit dem inneren Kreisabschnitt (iK2) des zweiten Kreisringabschnitts (K2) (S14); und
- Bestimmen der Position und der zumindest abschnittsweisen Form des Objekts (O) basierend auf dem reduzierten ersten Kreisringabschnittbereich (K1') und/oder dem reduzierten zweiten Kreisringabschnittbereich (K2') (S15).

2. Verfahren nach Anspruch 1, **dadurch gekennzeichnet, dass** das Beschränken des ersten Kreisringabschnitts (K1) auf den reduzierten ersten Kreisringabschnittbereich (K1') durch Verbinden des Berührpunkts (B1), an dem die erste Tangente (T1) den äußeren Kreisabschnitt (aK1) des ersten Kreisringabschnitts (K1) berührt, mit dem Berührpunkt (B2), an dem die dritte Tangente (T3) den inneren Kreisabschnitt (iK1) des ersten Kreisringabschnitts (K1) berührt, erfolgt und/oder dass das Beschränken des zweiten Kreisringabschnitts (K2) auf den reduzierten zweiten Kreisringabschnittbereich (K2') durch Verbinden des Berührpunkts (B3), an dem die erste Tangente (T1) den äußeren Kreisabschnitt (aK2) des zweiten Kreisringabschnitts (K2) berührt, mit dem Berührpunkt (B4), an dem die zweite Tangente (T2) den inneren Kreisabschnitt (iK2) des zweiten Kreisringabschnitts (K2) berührt, erfolgt.

3. Verfahren nach Anspruch 1 oder 2, **dadurch gekennzeichnet, dass** das Beschränken des ersten Kreisringabschnitts (K1) auf einen reduzierten ersten Kreisringabschnittbereich (K1') zudem auf Basis eines Schnittpunkts (S1) des inneren Kreisabschnitts (iK1) des ersten Kreisringabschnitts (K1) mit dem inneren Kreisabschnitt (iK2) des zweiten Kreisringabschnitts (K2) und/oder auf Basis eines Schnittpunkts (S2) des äußeren Kreisabschnitts (aK1) des ersten Kreisringabschnitts (K1) mit dem inneren Kreisabschnitt (iK2) des zweiten Kreisringabschnitts (K2) erfolgt.

4. Verfahren nach einem der vorhergehenden Ansprüche, **dadurch gekennzeichnet, dass** das Beschränken des zweiten Kreisringabschnitts (K2) auf einen reduzierten zweiten Kreisringabschnittbereich (K2') zudem auf Basis eines Schnittpunkts (S1) des inneren Kreisabschnitts (iK1) des ersten Kreisringabschnitts (K1) mit dem inneren Kreisabschnitt (iK2) des zweiten Kreisringabschnitts (K2) und/oder auf Basis eines Schnittpunkts (S3) des äußeren Kreisabschnitts (aK2) des zweiten Kreisringabschnitts (K2) mit dem inneren Kreisabschnitt (iK1) des ersten Kreisringabschnitts (K1) erfolgt.

5. Verfahren nach einem der vorhergehenden Ansprüche, **dadurch gekennzeichnet, dass** zumindest drei Messungen an unterschiedlichen Orten durchgeführt werden, so dass ein erster, ein zweiter und ein dritter Kreisringabschnitt (K1, K2, K3) entsteht, wobei der Ort, von dem aus die zweite Messung durchgeführt wird, zwischen dem ersten und dritten Ort liegt, wobei folgende Schritte vollzogen werden:
- Einschränken des zweiten Kreisringabschnitts (K2), der auf der zweiten Messung beruht, auf einen reduzierten zweiten Kreisringabschnittbereich (K2') unter Berücksichtigung des ersten Kreisringabschnitts (K1);
- Einschränken des zweiten Kreisringabschnitts (K), der auf der zweiten Messung beruht, auf einen weiteren reduzierten zweiten Kreisringabschnittbereich (K2") unter Berücksichtigung des dritten Kreisringabschnitts (K3); und
- Bilden einer Schnittmenge (K2‴) aus reduziertem zweiten Kreisringabschnittbereich (K2') und weiterem reduzierten zweiten Kreisringabschnittbereich (K2");
- Bestimmen der Position und abschnittsweisen Form des Objekts (O) basierend auf der Schnittmenge (K2‴) aus reduziertem zweiten Kreisringabschnittbereich (K2') und weiterem reduziertem zweiten Kreisringabschnittbereich (K2").

6. Verfahren nach einem der vorhergehenden Ansprüche, **dadurch gekennzeichnet, dass** zumindest drei Messungen an unterschiedlichen Orten durchgeführt werden, so dass ein erster, ein zweiter und ein dritter Kreisringabschnitt (K1, K2, K3) entsteht, wobei der Ort, von dem aus die zweite Messung durchgeführt wird, zwischen dem ersten und dritten Ort liegt, wobei der erste Kreisringabschnitt (K1) sukzessive auf Basis des zweiten und des dritten Kreisringabschnitts (K2; K3) eingeschränkt wird, und zwar:
- dass der erste Kreisringabschnitt (K1) zunächst auf einen reduzierten ersten Kreisringabschnittbereich (K1') beschränkt wird, und zwar basierend auf dem Berührpunkt (B1) einer ersten Tangente (T1), die an den äußeren Kreisabschnitten (aK1, aK2) des ersten und zweiten Kreisringabschnitts (K1, K2) anliegt, mit dem äußeren Kreisabschnitt (aK1) des ersten Kreisringabschnitts (K1) und dem Berührpunkt (B2) einer dritten Tangente (T3), die an den inneren Kreisabschnitt (iK1) des ersten Kreisringabschnitts (K1) und den äußeren Kreisabschnitt (aK2) des zweiten Kreisringabschnitts (K2) anliegt, mit dem inneren Kreisabschnitt (iK1) des ersten Kreisringabschnitts (K1); und
- dass der erste Kreisringabschnitt (K1) anschließend auf einen weiter reduzierten ersten Kreisringabschnittbereich (K1") beschränkt wird, und zwar basierend auf dem Berührpunkt (B5) einer vierten Tangente (T4), die an dem äußeren Kreisabschnitt (aK1) des ersten Kreisringabschnitts (K1) und dem äußeren Kreisabschnitt (aK3) des dritten Kreisringabschnitts (K3) anliegt, mit dem äußeren Kreisabschnitt (aK1) des ersten Kreisringabschnitts (K1) und dem Berührpunkt (B6) einer fünften Tangente (T5), die an den inneren Kreisabschnitt (iK1) des ersten Kreisringabschnitts (K1) und den äußeren Kreisabschnitt (aK3) des dritten Kreisringabschnitts (K3) anliegt, mit dem inneren Kreisabschnitt (iK1) des ersten Kreisringabschnitts (K1).

7. Verfahren nach einem der vorhergehenden Ansprüche, **dadurch gekennzeichnet, dass** die Beschränkung des Kreisringabschnitts (K1) einer ersten Messung basierend auf den Kreisringabschnitten (K2, K3, K4, K5) von mehr als zwei weiteren Messungen erfolgt.

8. Verfahren nach einem der vorhergehenden Ansprüche, **dadurch gekennzeichnet, dass** durch das Einschränken der Kreisringabschnitte (K1, K2, K3, K4) mehrerer Messungen, die an unterschiedlichen Orten aufgenommen wurden, eine Vielzahl von reduzierten Kreisringabschnittbereichen (K2', K3') entstehen, und dass die reduzierten Kreisringabschnittbereiche (K2', K3') zumindest teilweise miteinander zu einem schlauchartigen Lösungsraum (L) verbunden werden, wenn die einzelnen reduzierten Kreisringabschnittbereiche (K2', K3') jeweils eine in Umfangsrichtung gemessene Größenschwelle unterschritten haben.

9. System zur Bestimmung der Position und der zumindest abschnittsweisen Form eines Objekts (O) im Umgebungsbereich eines Fahrzeugs (F) umfassend eine Sensorik mit zumindest einem entfernungsmessenden Sensor (S) und eine Recheneinheit (R) zur Steuerung der Sensorik und Auswertung der Messinformationen, die durch die Sensorik bereitgestellt werden, wobei die Rechnereinheit (R) dazu konfiguriert ist, die folgenden Schritte auszuführen:
- Durchführen mehrerer zeitlich aufeinanderfolgender Sende-Empfangszyklen durch die Sensorik, wobei jeder Sende-Empfangszyklus das Aussenden eines Messsignals durch zumindest einen Sensor (S) und das Empfangen eines reflektierten Anteils dieses Messsignals durch den Sensor (S) umfasst;
- Bestimmen eines Kreisringabschnitts (K1, K2, K3), in dem ein Objektabschnitt des Objekts (O) liegt, an dem eine Reflexion des Messsignals erfolgt, pro Sende-Empfangszyklus basierend auf der Laufzeit zwischen dem Aussenden des Messignals und dem Empfangen eines reflektierten Anteils dieses Messsignals und einer Messunsicherheitsinformation, wobei der Kreisringabschnitt (K1, K2, K3), einen inneren Kreisabschnitt (iK1, iK2, iK3) und einen äußeren Kreisabschnitt (aK1, aK2, aK3) aufweist und wobei der Abstand des inneren Kreisabschnitts (iK1) und des äußeren Kreisabschnitts (aK1) durch die Messunsicherheitsinformation festgelegt wird;
- Auswählen zumindest eines ersten und eines zweiten Kreisringabschnitts (K1, K2), wobei der erste und der zweite Kreisringabschnitt (K1, K2) auf Reflektionen an einem gemeinsamen Objekt (O) basieren;
- Bilden einer ersten Tangente (T1) an die äußeren Kreisabschnitte (aK1, aK2) des ersten und zweiten Kreisringabschnitts (K1, K2), einer zweiten Tangente (T2) an den äußeren Kreisabschnitt (aK1) des ersten Kreisringabschnitts (K1) und den inneren Kreisabschnitt (iK2) des zweiten Kreisringabschnitts (K2) und einer dritten Tangente (T3) an den inneren Kreisabschnitt (iK1) des ersten Kreisringabschnitts (K1) und den äußeren Kreisabschnitt (aK2) des zweiten Kreisringabschnitts (K2);
- Beschränken des ersten Kreisringabschnitts (K1) auf einen reduzierten ersten Kreisringabschnittbereich (K1') basierend auf dem Berührpunkt (B1) der ersten Tangente (T1) mit dem äußeren Kreisabschnitt (aK1) des ersten Kreisringabschnitts (K1) und dem Berührpunkt (B2) der dritten Tangente (T3) mit dem inneren Kreisabschnitt (iK1) des ersten Kreisringabschnitts (K1) und/oder Beschränken des zweiten Kreisringabschnitts (K2) auf einen reduzierten zweiten Kreisringabschnittbereich (K2') basierend auf dem Berührpunkt (B3) der ersten Tangente (T1) mit dem äußeren Kreisabschnitt (aK2) des zweiten Kreisringabschnitts (K2) und dem Berührpunkt (B4) der zweiten Tangente (T2) mit dem inneren Kreisabschnitt (iK2) des zweiten Kreisringabschnitts (K2); und
- Bestimmen der Position und der zumindest abschnittsweisen Form des Objekts (O) basierend auf dem reduzierten ersten Kreisringabschnittbereich (K1') und/oder dem reduzierten zweiten Kreisringabschnittbereich (K2').

## Claims

1. A method for determining the position and the shape of an object (O) at least in sections by a sensor system of a vehicle (F), wherein the sensor system of the vehicle (F) has at least one distance-measuring sensor (S), wherein the method has the following steps:
- performing several temporally successive transmission-reception cycles by the sensor system (S10), wherein each transmission-reception cycle comprises transmitting a measurement signal by at least one sensor (S) and receiving a reflected portion of this measurement signal by the sensor (S);
- determining a circular ring section (K1, K2, K3) in which an object section of the object (O) is located, at which a reflection of the measurement signal occurs, per transmission-reception cycle based on the run time between transmitting the measurement signal and receiving a reflected portion of this measurement signal and a measurement uncertainty information (S11), wherein the circular ring section (K1, K2, K3) has an inner circular section (iK1, iK2, iK3) and an outer circular section (aKl, aK2, aK3), and wherein the distance of the inner circular section (iK1, iK2, iK3) and the outer circular section (aKl, aK2, aK3) is determined by the measurement uncertainty information;
- selecting at least a first and a second circular ring section (K1, K2), wherein the first and second circular ring sections (K1, K2) are based on reflections on a common object (O) (S12);
- forming a first tangent (T1) to the outer circular sections (aKl, aK2) of the first and second circular ring sections (K1, K2), a second tangent (T2) to the outer circular section (aK1) of the first circular ring section (K1) and the inner circular section (iK2) of the second circular ring section (K2) and a third tangent (T3) to the inner circular section (iK1) of the first circular ring section (K1) and the outer circular section (aK2) of the second circular ring section (K2) (S13);
- limiting the first circular ring section (K1) to a reduced first circular ring section area (K1') based on the contact point (B1) of the first tangent (T1) with the outer circular section (aK1) of the first circular ring section (K1) and the contact point (B2) of the third tangent (T3) with the inner circular section (iK1) of the first circular ring section (K1) and/or limiting the second circular ring section (K2) to a reduced second circular ring section area (K2') based on the contact point (B3) of the first tangent (T1) with the outer circular section (aK2) of the second circular ring section (K2) and the contact point (B4) of the second tangent (T2) with the inner circular section (iK2) of the second circular ring section (K2) (S14); and
- determining the position and the shape of the object (O) at least in sections based on the reduced first circular ring section area (K1') and/or the reduced second circular ring section area (K2') (S15).

2. The method according to claim 1, **characterised in that** limiting the first circular ring section (K1) to the reduced first circular ring section area (K1') is by connecting the contact point (B1) at which the first tangent (T1) touches the outer circular section (aK1) of the first circular ring section (K1) to the contact point (B2) at which the third tangent (T3) touches the inner circular section (iK1) of the first circular ring section (K1) and/or that limiting the second circular ring section (K2) to the reduced second circular ring section area (K2') is by connecting the contact point (B3) at which the first tangent (T1) touches the outer circular section (aK2) of the second circular ring section (K2) to the contact point (B4) at which the second tangent (T2) touches the inner circular section (iK2) of the second circular ring section (K2).

3. The method according to claim 1 or 2, **characterised in that** limiting the first circular ring section (K1) to a reduced first circular ring section area (K1') is also on the basis of an intersection point (S1) of the inner circular section (iK1) of the first circular ring section (K1) with the inner circular section (iK2) of the second circular ring section (K2) and/or on the basis of an intersection point (S2) of the outer circular section (aK1) of the first circular ring section (K1) with the inner circular section (iK2) of the second circular ring section (K2).

4. The method according to any one of the preceding claims, **characterised in that** limiting the second circular ring section (K2) to a reduced second circular ring section area (K2') is also on the basis of an intersection point (S1) of the inner circular section (iK1) of the first circular ring section (K1) with the inner circular section (iK2) of the second circular ring section (K2) and/or on the basis of an intersection point (S3) of the outer circular section (aK2) of the second circular ring section (K2) with the inner circular section (iK1) of the first circular ring section (K1).

5. The method according to any one of the preceding claims, **characterised in that** at least three measurements are performed at different locations, so that a first, a second and a third circular ring section (K1, K2, K3) are created, wherein the location from which the second measurement is performed is located between the first and third locations, wherein the following steps are carried out:
- restricting the second circular ring section (K2), which is based on the second measurement, to a reduced second circular ring section area (K2') taking into account the first circular ring section (K1);
- restricting the second circular ring section (K), which is based on the second measurement, to a further reduced second circular ring section area (K2") taking into account the third circular ring section (K3); and
- forming an intersection (K2"') of the reduced second circular ring section area (K2') and the further reduced second circular ring section area (K2");
- determining the position and the shape of the object (O) in sections based on the intersection (K2") of the reduced second circular ring section area (K2') and the further reduced second circular ring section area (K2").

6. The method according to any one of the preceding claims, **characterised in that** at least three measurements are performed at different locations, so that a first, a second and a third circular ring section (K1, K2, K3) are created, wherein the location from which the second measurement is performed is located between the first and third locations, wherein the first circular ring section (K1) is successively restricted on the basis of the second and third circular ring sections (K2; K3), namely:
- that the first circular ring section (K1) is initially limited to a reduced first circular ring section area (K1'), based on the contact point (B1) of a first tangent (T1) which bears against the outer circular sections (aKl, aK2) of the first and second circular ring sections (K1, K2) with the outer circular section (aK1) of the first circular ring section (K1) and the contact point (B2) of a third tangent (T3) which bears against the inner circular section (iK1) of the first circular ring section (K1) and the outer circular section (aK2) of the second circular ring section (K2) with the inner circular section (iK1) of the first circular ring section (K1); and
- that the first circular ring section (K1) is then limited to a further reduced first circular ring section area (K1''), based on the contact point (B5) of a fourth tangent (T4) which bears against the outer circular section (aK1) of the first circular ring section (K1) and the outer circular section (aK3) of the third circular ring section (K3) with the outer circular section (aK1) of the first circular ring section (K1) and the contact point (B6) of a fifth tangent (T5) which bears against the inner circular section (iK1) of the first circular ring section (K1) and the outer circular section (aK3) of the third circular ring section (K3) with the inner circular section (iK1) of the first circular ring section (K1).

7. The method according to any one of the preceding claims, **characterised in that** the limitation of the circular ring section (K1) of a first measurement is based on the circular ring sections (K2, K3, K4, K5) of more than two further measurements.

8. The method according to any one of the preceding claims, **characterised in that** by restricting the circular ring sections (K1, K2, K3, K4) of several measurements which were recorded at different locations, a plurality of reduced circular ring section areas (K2', K3') is created, and **in that** the reduced circular ring section areas (K2', K3') are at least partially connected to one another to form a tube-like solution space (L) when the individual reduced circular ring section areas (K2', K3') have each fallen below a size threshold measured in the circumferential direction.

9. A system for determining the position and the shape of an object (O) at least in sections in the surrounding area of a vehicle (F), comprising a sensor system with at least one distance-measuring sensor (S) and a computing unit (R) for controlling the sensor system and evaluating the measurement information provided by the sensor system, wherein the computing unit (R) is configured to execute the following steps:
- performing several temporally successive transmission-reception cycles by the sensor system, wherein each transmission-reception cycle comprises transmitting a measurement signal by at least one sensor (S) and receiving a reflected portion of this measurement signal by the sensor (S);
- determining a circular ring section (K1, K2, K3) in which an object section of the object (O) is located, at which a reflection of the measurement signal occurs, per transmission-reception cycle based on the run time between transmitting the measurement signal and receiving a reflected portion of this measurement signal and a measurement uncertainty information, wherein the circular ring section (K1, K2, K3) has an inner circular section (iK1, iK2, iK3) and an outer circular section (aKl, aK2, aK3), and wherein the distance of the inner circular section (iK1) and the outer circular section (aK1) is determined by the measurement uncertainty information;
- selecting at least a first and a second circular ring section (K1, K2), wherein the first and second circular ring sections (K1, K2) are based on reflections on a common object (O);
- forming a first tangent (T1) to the outer circular sections (aKl, aK2) of the first and second circular ring sections (K1, K2), a second tangent (T2) to the outer circular section (aK1) of the first circular ring section (K1) and the inner circular section (iK2) of the second circular ring section (K2) and a third tangent (T3) to the inner circular section (iK1) of the first circular ring section (K1) and the outer circular section (aK2) of the second circular ring section (K2);
- limiting the first circular ring section (K1) to a reduced first circular ring section area (K1') based on the contact point (B1) of the first tangent (T1) with the outer circular section (aK1) of the first circular ring section (K1) and the contact point (B2) of the third tangent (T3) with the inner circular section (iK1) of the first circular ring section (K1) and/or limiting the second circular ring section (K2) to a reduced second circular ring section area (K2') based on the contact point (B3) of the first tangent (T1) with the outer circular section (aK2) of the second circular ring section (K2) and the contact point (B4) of the second tangent (T2) with the inner circular section (iK2) of the second circular ring section (K2); and
- determining the position and the shape of the object (O) at least in sections based on the reduced first circular ring section area (K1') and/or the reduced second circular ring section area (K2').

## Revendications

1. Procédé pour déterminer la position et la forme au moins par sections d'un objet (O) par un système de détection d'un véhicule (F), dans lequel le système de détection du véhicule (F) présente au moins un capteur de mesure de distance (S), dans lequel le procédé présente les étapes suivantes :
- Réalisation d'une pluralité de cycles d'émission-réception temporellement successifs par le système de détection (S10), dans lequel chaque cycle d'émission-réception comprend l'émission d'un signal de mesure par au moins un capteur (S) et la réception d'une partie réfléchie de ce signal de mesure par le capteur (S) ;
- Détermination d'une section d'anneau circulaire (K1, K2, K3) dans laquelle se trouve une section d'objet de l'objet (0), au niveau de laquelle intervient une réflexion du signal de mesure, par cycle d'émission-réception sur la base du temps de propagation entre l'émission du signal de mesure et la réception d'une partie réfléchie de ce signal de mesure et d'une information d'incertitude de mesure (S11), dans lequel la section d'anneau circulaire (K1, K2, K3) présente une section circulaire intérieure (iK1, iK2, iK3) et une section circulaire extérieure (aKl, aK2, aK3), et dans lequel la distance entre la section circulaire intérieure (iK1, iK2, iK3) et la section circulaire extérieure (aKl, aK2, aK3) est déterminée par l'information d'incertitude de mesure ;
- Sélection d'au moins une première et une deuxième section d'anneau circulaire (K1, K2), dans lequel la première et la deuxième section d'anneau circulaire (K1, K2) sont basées sur des réflexions sur un objet commun (O) (S12) ;
- Formation d'une première tangente (T1) aux sections circulaires extérieures (aKl, aK2) des première et deuxième sections d'anneau circulaire (K1, K2), d'une deuxième tangente (T2) à la section circulaire extérieure (aK1) de la première section d'anneau circulaire (K1) et à la section circulaire intérieure (iK2) de la deuxième section d'anneau circulaire (K2) et d'une troisième tangente (T3) à la section circulaire intérieure (iK1) de la première section d'anneau circulaire (K1) et à la section circulaire extérieure (aK2) de la deuxième section d'anneau circulaire (K2) (S13) ;
- Limitation de la première section d'anneau circulaire (K1) à une zone réduite de première section d'anneau circulaire (K1') sur la base du point de contact (B1) de la première tangente (T1) avec la section circulaire extérieure (aK1) de la première section d'anneau circulaire (K1) et du point de contact (B2) de la troisième tangente (T3) avec la section circulaire intérieure (iK1) de la première section d'anneau circulaire (K1) et/ou limitation de la deuxième section d'anneau circulaire (K2) à une zone réduite de deuxième section d'anneau circulaire (K2') sur la base du point de contact (B3) de la première tangente (T1) avec la section circulaire extérieure (aK2) de la deuxième section d'anneau circulaire (K2) et du point de contact (B4) de la deuxième tangente (T2) avec la section circulaire intérieure (iK2) de la deuxième section d'anneau circulaire (K2) (S14) ; et
- Détermination de la position et de la forme au moins par sections de l'objet (O) sur la base de la première zone réduite de section d'anneau circulaire (K1') et/ou de la deuxième zone réduite de section d'anneau circulaire (K2') (S15).

2. Procédé selon la revendication 1, **caractérisé en ce que** la limitation de la première section d'anneau circulaire (K1) à la zone réduite de première section d'anneau circulaire (K1') intervient par la liaison du point de contact (B1), où la première tangente (T1) touche la section circulaire extérieure (aK1) de la première section d'anneau circulaire (K1), au point de contact (B2) où la troisième tangente (T3) touche la section circulaire intérieure (iK1) de la première section d'anneau circulaire (K1), et/ou **en ce que** la limitation de la deuxième section d'anneau circulaire (K2) à la zone réduite de deuxième section d'anneau circulaire (K2') intervient par la liaison du point de contact (B3), où la première tangente (T1) touche la section circulaire extérieure (aK2) de la deuxième section d'anneau circulaire (K2), au point de contact (B4), où la deuxième tangente (T2) touche la section circulaire intérieure (iK2) de la deuxième section d'anneau circulaire (K2).

3. Procédé selon la revendication 1 ou 2, **caractérisé en ce que** la limitation de la première section d'anneau circulaire (K1) à une zone réduite de première section d'anneau circulaire (K1') intervient également sur la base d'un point d'intersection (S1) de la section circulaire intérieure (iK1) de la première section d'anneau circulaire (K1) avec la section circulaire intérieure (iK2) de la deuxième section d'anneau circulaire (K2) et/ou sur la base d'un point d'intersection (S2) de la section circulaire extérieure (aK1) de la première section d'anneau circulaire (K1) avec la section circulaire intérieure (iK2) de la deuxième section d'anneau circulaire (K2).

4. Procédé selon l'une des revendications précédentes, **caractérisé en ce que** la limitation de la deuxième section d'anneau circulaire (K2) à une zone réduite de deuxième section d'anneau circulaire (K2') intervient également sur la base d'un point d'intersection (S1) de la section circulaire intérieure (iK1) de la première section d'anneau circulaire (K1) avec la section circulaire intérieure (iK2) de la deuxième section d'anneau circulaire (K2) et/ou sur la base d'un point d'intersection (S3) de la section circulaire extérieure (aK2) de la deuxième section d'anneau circulaire (K2) avec la section circulaire intérieure (iK1) de la première section d'anneau circulaire (K1).

5. Procédé selon l'une quelconque des revendications précédentes, **caractérisé en ce qu'**au moins trois mesures interviennent à différents endroits, de sorte qu'une première, une deuxième et une troisième section d'anneau circulaire (K1, K2, K3) sont créées, dans lequel l'endroit à partir duquel la deuxième mesure est effectuée se trouve entre les premier et troisième endroits, dans lequel les étapes suivantes sont réalisées :
- Limitation de la deuxième section d'anneau circulaire (K2), qui est basée sur la deuxième mesure, à une zone réduite de deuxième section d'anneau circulaire (K2') avec prise en compte de la première section d'anneau circulaire (K1) ;
- Limitation de la deuxième section d'anneau circulaire (K), qui est basée sur la deuxième mesure, à une zone encore plus réduite de deuxième section d'anneau circulaire (K2'') avec prise en compte de la troisième section d'anneau circulaire (K3) ; et
- Formation d'une intersection (K2‴) de la zone réduite de deuxième section d'anneau circulaire (K2') et d'une zone encore plus réduite de deuxième section d'anneau circulaire (K2") ;
- Détermination de la position et de la forme au moins par sections de l'objet (O) sur la base de l'intersection (K2‴) de la zone réduite de deuxième section d'anneau circulaire (K2') et de la zone encore plus réduite de deuxième section d'anneau circulaire (K2").

6. Procédé selon l'une des revendications précédentes, **caractérisé en ce qu'**au moins trois mesures interviennent à différents endroits, de sorte qu'une première, une deuxième et une troisième section d'anneau circulaire (K1, K2, K3) sont créées, dans lequel l'endroit à partir duquel la deuxième mesure est effectuée est situé entre les premier et troisième endroits, dans lequel la première section d'anneau circulaire (K1) est limitée successivement sur la base de la deuxième et de la troisième section d'anneau circulaire (K2 ; K3), à savoir :
- que la première section d'anneau circulaire (K1) est initialement limitée à une zone réduite de première section d'anneau circulaire (K1'), en l'occurrence sur la base du point de contact (B1) d'une première tangente (T1) qui s'appuie sur les sections circulaires extérieures (aKl, aK2) des première et deuxième sections d'anneau circulaire (K1, K2) avec la section circulaire extérieure (aK1) de la première section d'anneau circulaire (K1) et le point de contact (B2) d'une troisième tangente (T3) qui s'appuie sur la section circulaire intérieure (iK1) de la première section d'anneau circulaire (K1) et la section circulaire extérieure (aK2) de la deuxième section d'anneau circulaire (K2) avec la section circulaire intérieure (iK1) de la première section d'anneau circulaire (K1) ; et
- que la première section d'anneau circulaire (K1) est ensuite limitée à une zone encore plus réduite de première section d'anneau circulaire (K1''), en l'occurrence sur la base du point de contact (B5) d'une quatrième tangente (T4) qui s'appuie sur la section circulaire extérieure (aK1) de la première section d'anneau circulaire (K1) et la section circulaire extérieure (aK3) de la troisième section d'anneau circulaire (K3), avec la section circulaire extérieure (aK1) de la première section d'anneau circulaire (K1) et le point de contact (B6) d'une cinquième tangente (T5), qui s'appuie sur la section circulaire intérieure (iK1) de la première section d'anneau circulaire (K1) et la section circulaire extérieure (aK3) de la troisième section d'anneau circulaire (K3) avec la section circulaire intérieure (iK1) de la première section d'anneau circulaire (K1).

7. Procédé selon l'une des revendications précédentes, **caractérisé en ce que** la limitation de la section d'anneau circulaire (K1) d'une première mesure intervient sur la base des sections d'anneau circulaire (K2, K3, K4, K5) de plus de deux autres mesures.

8. Procédé selon l'une des revendications précédentes, **caractérisé en ce que**, par la limitation des sections d'anneau circulaire (K1, K2, K3, K4) de plusieurs mesures enregistrées à différents endroits, une pluralité de zones réduites de segments d'anneau circulaire (K2', K3') apparaît, et **en ce que** les zones réduites de segments d'anneau circulaire (K2', K3') sont au moins partiellement reliées entre elles pour former un espace de solution tubulaire (L) lorsque les zones réduites individuelles de segments d'anneau circulaire (K2', K3') sont chacune descendues en dessous d'un seuil de taille mesuré dans la direction circonférentielle.

9. Système de détermination de la position et de la forme au moins par sections d'un objet (O) dans l'environnement d'un véhicule (F), comprenant un système de détection avec au moins un capteur de mesure de distance (S) et une unité de calcul (R) pour commander le système de détection et évaluer les informations de mesure fournies par le système de détection, dans lequel l'unité de calcul (R) est configurée pour effectuer les étapes suivantes :
- Réalisation d'une pluralité de cycles d'émission-réception temporellement successifs par le système de détection, dans lequel chaque cycle d'émission-réception comprend l'émission d'un signal de mesure par au moins un capteur (S) et la réception d'une partie réfléchie de ce signal de mesure par le capteur (S) ;
- Détermination d'une section d'anneau circulaire (K1, K2, K3) dans laquelle se trouve une section d'objet de l'objet (0), au niveau de laquelle intervient une réflexion du signal de mesure, par cycle d'émission-réception sur la base du temps de propagation entre l'émission du signal de mesure et la réception d'une partie réfléchie de ce signal de mesure et d'une information d'incertitude de mesure, dans lequel la section d'anneau circulaire (K1, K2, K3) présente une section circulaire intérieure (iK1, iK2, iK3) et une section circulaire extérieure (aKl, aK2, aK3), et dans lequel la distance entre la section circulaire intérieure (iK1) et la section circulaire extérieure (aK1) est déterminée par l'information d'incertitude de mesure ;
- Sélection d'au moins une première et une deuxième section d'anneau circulaire (K1, K2), dans lequel la première et la deuxième section d'anneau circulaire (K1, K2) sont basées sur des réflexions sur un objet commun (O) ;
- Formation d'une première tangente (T1) aux sections circulaires extérieures (aKl, aK2) des première et deuxième sections d'anneau circulaire (K1, K2), d'une deuxième tangente (T2) à la section circulaire extérieure (aK1) de la première section d'anneau circulaire (K1) et à la section circulaire intérieure (iK2) de la deuxième section d'anneau circulaire (K2) et d'une troisième tangente (T3) à la section circulaire intérieure (iK1) de la première section d'anneau circulaire (K1) et à la section circulaire extérieure (aK2) de la deuxième section d'anneau circulaire (K2) ;
- Limitation de la première section d'anneau circulaire (K1) à une zone réduite de première section d'anneau circulaire (K1') sur la base du point de contact (B1) de la première tangente (T1) avec la section circulaire extérieure (aK1) de la première section d'anneau circulaire (K1) et du point de contact (B2) de la troisième tangente (T3) avec la section circulaire intérieure (iK1) de la première section d'anneau circulaire (K1) et/ou limitation de la deuxième section d'anneau circulaire (K2) à une zone réduite de deuxième section d'anneau circulaire (K2') sur la base du point de contact (B3) de la première tangente (T1) avec la section circulaire extérieure (aK2) de la deuxième section d'anneau circulaire (K2) et du point de contact (B4) de la deuxième tangente (T2) avec la section circulaire intérieure (iK2) de la deuxième section d'anneau circulaire (K2) ; et
- Détermination de la position et de la forme au moins par sections de l'objet (0) sur la base de la première zone réduite de section d'anneau circulaire (K1') et/ou de la deuxième zone réduite de section d'anneau circulaire (K2').
